# EUROPEAN PATENT APPLICATION

(11) **EP 4 472 289 A1**
(43) Date of publication of application: **04.12.2024**
(21) Application number: 22922844.0
(22) Date of filing: 28.01.2022
(51) Int. Cl.: H04W 48/02, H04W 48/08

(54) **ADMISSION RESTRICTION METHOD AND APPARATUS, AND COMMUNICATION SYSTEM**

(71) Applicant: FUJITSU LIMITED, Kawasaki-shi, Kanagawa 211-8588 (JP)
(72) Inventor: JIA, Meiyi, Beijing 100022 (CN); ZHANG, Lei, Beijing 100022 (CN); YI, Su, Beijing 100022 (CN)
(74) Representative: Haseltine Lake Kempner LLP
(86) International application number: PCT/CN2022/074834
(87) International publication number: WO 2023/142007

(57) **Abstract**

Embodiments of this disclosure provide an access control method and apparatus and a system. The access control method includes: receiving a first message related to access control by a repeater, the first message containing or not containing first information; and ignoring the first information, and/or skipping over first processing related to the access control, and/or performing second processing related to the access control, by the repeater.

## Description

### Technical Field

This disclosure relates to the field of communication technologies.

### Background

Compared with traditional 3G (third generation mobile communication technology) and 4G (fourth generation mobile communication technology) systems, a 5G (fifth generation mobile communication technology) system can provide larger bandwidths and higher data rates, and can support more types of terminals and vertical services. For this reason, a deployment frequency of a 5G system is obviously higher than those of 3G and 4G systems. For example, a 5G system may be deployed in a millimeter waveband.

However, the higher a carrier frequency, the more severe a fading experienced by signals during transmission. Therefore, in actual deployment of a 5G system, especially in the millimeter waveband, how to better enhance cell coverage becomes an urgent problem to be solved.

It should be noted that the above description of the background is merely provided for clear and complete explanation of this disclosure and for easy understanding by those skilled in the art. And it should not be understood that the above technical solution is known to those skilled in the art as it is described in the background of this disclosure.

### Summary

In order to better solve the coverage problem of cellular mobile communication systems in practical deployment, use of a radio frequency (RF) repeater to amplify and forward signals between a terminal equipment and a network device is commonly used means of deployment. RF repeaters are widely used in actual deployment of 3G and 4G systems. Generally speaking, an RF repeater is a device that amplifies and forwards signals between a network device and a terminal equipment in the RF domain.

One of feasible solutions to address the coverage problem encountered in the deployment of 5G systems is to use RF repeaters for coverage enhancement. However, traditional repeaters do not have the ability to communicate with network devices and cannot obtain information on uplink and downlink configurations from the network devices. Therefore, deploying such repeaters in 5G systems, although it is helpful to enhancement of signal strengths, is not flexible enough to cope with complex environmental changes, and thus cannot achieve the same effects as deploying the same RF repeaters in 3G and 4G systems.

A smart repeater is enhancement of a traditional RF repeater, and has the ability to receive and process side control information from a network. The side control information allows the smart repeater to perform its amplification and forwarding operations in a more efficient manner. Hence, unnecessary noise amplification may be reduced, transmission and reception having better spatial directionality may be provided, and network integration may be simplified.

However, it was found by the inventors that for scenarios where smart repeaters are deployed, there is currently no research on how the smart repeaters perform access control.

In order to solve at least one of the above problems, embodiments of this disclosure provide an access control method and apparatus and a system.

According to one aspect of the embodiments of this disclosure, there is provided an access control apparatus, applicable to a repeater, the apparatus including:
a first receiving unit configured to receive a first message related to access control, the first message containing or not containing first information; and
a first processing unit configured to ignore the first information, and/or skip over first processing related to the access control, and/or perform second processing related to the access control.

According to another aspect of the embodiments of this disclosure, there is provided an access control apparatus, applicable to a network device, the apparatus including:
a first transmitting unit configured to transmit a first message related to access control to a repeater, the first message containing first information, the first information being a specific value, or the first message not containing first information;
   or,
not to transmit a first message related to access control to a repeater;
   or,
the apparatus including:
   a second receiving unit configured to receive second message transmitted by a repeater; and
   a second processing unit configured to process a request related to the second message with a high priority.

According to a further aspect of the embodiments of this disclosure, there is provided a communication system, including a network device and/or a repeater, the repeater including the access control apparatus described in the one aspect, and the network device including the access control apparatus described in the other aspect.

An advantage of the embodiments of this disclosure exists in that the repeater ignores the first information contained in the first message related to access control, and/or skips over first processing related to the access control, and/or performs second processing related to the access control, so that the repeater may not be controlled by an existing access control mechanism. Hence, network congestion may be alleviated, and the deployment cost may be lowered.

With reference to the following description and drawings, the particular embodiments of this disclosure are disclosed in detail, and the principle of this disclosure and the manners of use are indicated. It should be understood that the scope of the embodiments of this disclosure is not limited thereto. The embodiments of this disclosure contain many alternations, modifications and equivalents within the spirits and scope of the terms of the appended claims.

Features that are described and/or illustrated with respect to one embodiment may be used in the same way or in a similar way in one or more other embodiments and/or in combination with or instead of the features of the other embodiments.

It should be emphasized that the term "comprises/comprising/includes/including" when used in this specification is taken to specify the presence of stated features, integers, steps or components but does not preclude the presence or addition of one or more other features, integers, steps, components or groups thereof.

### Brief Description of the Drawings

Elements and features depicted in one drawing or embodiment of the invention may be combined with elements and features depicted in one or more additional drawings or embodiments. Moreover, in the drawings, like reference numerals designate corresponding parts throughout the several views and may be used to designate like or similar parts in more than one embodiment.
FIG. 1 is schematic diagram of a communication system of an embodiment of this disclosure;
FIGs. 2 and 3 are schematic diagrams of receiving and transmitting signals by a repeater in an embodiment of this disclosure;
FIG. 4 is a schematic diagram of an RRC connection establishment procedure;
FIG. 5 is a schematic diagram of an RRC connection resume procedure;
FIG. 6 is a schematic diagram of an RRC connection release procedure;
FIG. 7 is a schematic diagram of an access control method of an embodiment of this disclosure;
FIG. 8 is a schematic diagram of an access control method of an embodiment of this disclosure;
FIG. 9 is a schematic diagram of an access control method of an embodiment of this disclosure;
FIG. 10 is a schematic diagram of an access control method of an embodiment of this disclosure;
FIG. 11 is a schematic diagram of an access control apparatus of an embodiment of this disclosure;
FIG. 12 is a schematic diagram of an access control apparatus of an embodiment of this disclosure;
FIG. 13 is a schematic diagram of an access control apparatus of an embodiment of this disclosure;
FIG. 14 is a schematic diagram of an access control apparatus of an embodiment of this disclosure;
FIG. 15 is a schematic diagram of a network device of an embodiment of this disclosure; and
FIG. 16 is a schematic diagram of a repeater of an embodiment of this disclosure.

### Detailed Description of the Disclosure

These and further aspects and features of this disclosure will be apparent with reference to the following description and attached drawings. In the description and drawings, particular embodiments of the invention have been disclosed in detail as being indicative of some of the ways in which the principles of the invention may be employed, but it is understood that the invention is not limited correspondingly in scope. Rather, the invention includes all changes, modifications and equivalents coming within the spirit and terms of the appended claims.

In the embodiments of this disclosure, terms "first", and "second", etc., are used to differentiate different elements with respect to names, and do not indicate spatial arrangement or temporal orders of these elements, and these elements should not be limited by these terms. Terms "and/or" include any one and all combinations of one or more relevantly listed terms. Terms "contain", "include" and "have" refer to existence of stated features, elements, components, or assemblies, but do not exclude existence or addition of one or more other features, elements, components, or assemblies.

In the embodiments of this disclosure, single forms "a", and "the", etc., include plural forms, and should be understood as "a kind of" or "a type of" in a broad sense, but should not defined as a meaning of "one"; and the term "the" should be understood as including both a single form and a plural form, except specified otherwise. Furthermore, the term "according to" should be understood as "at least partially according to", the term "based on" should be understood as "at least partially based on", except specified otherwise.

In the embodiments of this disclosure, the term "communication network" or "wireless communication network" may refer to a network satisfying any one of the following communication standards: long term evolution (LTE), long term evolution-advanced (LTE-A), wideband code division multiple access (WCDMA), and highspeed packet access (HSPA), etc.

And communication between devices in a communication system may be performed according to communication protocols at any stage, which may, for example, include but not limited to the following communication protocols: 1G (generation), 2G, 2.5G, 2.75G, 3G, 4G, 4.5G, and 5G and new radio (NR) in the future, etc., and/or other communication protocols that are currently known or will be developed in the future.

In the embodiments of this disclosure, the term "network device", for example, refers to a device in a communication system that accesses a user equipment to the communication network and provides services for the user equipment. The network device may include but not limited to the following devices: a base station (BS), an access point (AP), a transmission reception point (TRP), a broadcast transmitter, a mobile management entity (MME), a gateway, a server, a radio network controller (RNC), a base station controller (BSC), etc.

The base station may include but not limited to a node B (NodeB or NB), an evolved node B (eNodeB or eNB), and a 5G base station (gNB), etc. Furthermore, it may include a remote radio head (RRH), a remote radio unit (RRU), a relay, or a low-power node (such as a femto, and a pico, etc.). The term "base station" may include some or all of its functions, and each base station may provide communication coverage for a specific geographical area. And a term "cell" may refer to a base station and/or its coverage area, depending on a context of the term. Without causing confusion, "a cell" and "a base station" are interchangeable.

In the embodiments of this disclosure, the term "user equipment (UE)" or "a terminal equipment (TE) or a terminal device" refers to, for example, an equipment accessing to a communication network and receiving network services via a network device. The terminal equipment may be fixed or mobile, and may also be referred to as a mobile station (MS), a terminal, a subscriber station (SS), an access terminal (AT), an IAB-MT, or a station, etc.

The terminal equipment may include but not limited to the following devices: a cellular phone, a personal digital assistant (PDA), a wireless modem, a wireless communication device, a hand-held device, a Machine-type communication device, a lap-top, a cordless telephone, a smart cell phone, a smart watch, and a digital camera, etc.

For another example, in a scenario of the Internet of Things (IoT), etc., the user equipment may also be a Machine or a device performing monitoring or measurement. For example, it may include but not limited to a Machine-type communication (MTC) terminal, a vehicle mounted communication terminal, a device to device (D2D) terminal, and a machine to machine (M2M) terminal, etc.

Moreover, the term "network side" or "network device side" refers to a side of a network, which may be a base station or a core network device, and may include one or more network devices described above. The term "user side" or "terminal side" or "terminal equipment side" refers to a side of a user or a terminal, which may be a UE, and may include one or more terminal equipments described above. In this text, "a device" may refer to a network device, or may refer to a terminal equipment, except specified otherwise.

Scenarios of the embodiments of this disclosure shall be described below by way of examples; however, this disclosure is not limited thereto.

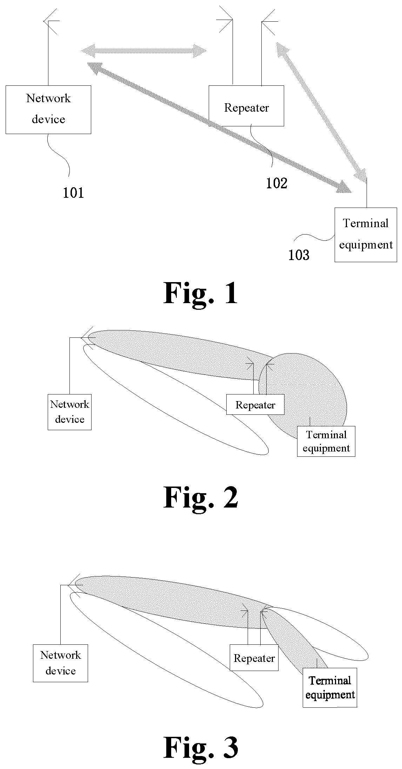

FIG. 1 is schematic diagram of an application scenario of an embodiment of this disclosure. As shown in FIG. 1, for the sake of description, the description shall be given by taking a network device (such as a 5G gNB or gNB-CU) 101, a repeater 102 and a terminal equipment (UE) 103 as examples; however, this disclosure is not limited thereto. As shown in FIG. 1, the terminal equipment 103 may establish connection with the network device 101 and communicate therewith. In order improve communication quality, signals between the terminal equipment 103 and the network device 101 may be processed (such as being amplified) by the repeater 102.

As shown in FIG. 1, radiated or conducted RF carriers are received, processed and transmitted in a downlink direction (from a network device to a terminal equipment) and an uplink direction (from the terminal equipment to the network device). The processing includes power amplification, beamforming, and reshaping a propagation environment, etc. In an operating frequency band where only downlink or uplink is designated, only the designated uplink or downlink is repeated.

FIGs. 2 and 3 are schematic diagrams of receiving and transmitting signals by a repeater. As shown in FIG. 2, the repeater includes an omnidirectional or fixed-direction (non-adaptive along with the time) Tx/Rx repeater or a repeater with an adaptive ability along with the time. As shown in FIG. 3, beams for transferring RF signals are controlled by the network device (such as an RAN node).

In the embodiment of this disclosure, existing traffics or traffics that may be implemented in the future may be performed between the network device and the terminal equipment. For example, such traffics may include but not limited to enhanced mobile broadband (eMBB), massive machine type communication (MTC), ultra-reliable and low-latency communication (URLLC), and Vehicle to Everything (V2X), etc.

Description in FIG. 1 is given by taking that the repeater can forward signals between the network device and the terminal equipment as an example; however, this disclosure is not limited thereto. For example, a repeater may act as a second device and forward signals between a first device and a third device, and can communicate directly with the first device and/or the third device. The first, second and third devices may be any devices in the above-described network. In the following embodiments, description shall be given by taking that the first device is a network device and the third device is a terminal equipment as an example.

In the present embodiment, the beam may also be expressed as a lobe, a reference signal (RS), a transmission configuration indication (TCI), and a spatial domain filter, etc., or, it may also be expressed as a beam index, a lobe index, a reference signal index, a transmission configuration indication index, and a spatial filter index, etc. The reference signal is, for example, a channel state information reference signal (CSI-RS), a sounding reference signal (SRS), an RS for use by a repeater, and an RS transmitted by a repeater, etc. The TCI may also be expressed as a TCI state.

In the embodiments of this disclosure, the repeater may also be expressed as a network controlled repeater (NCR), or a reconfigurable intelligent surface (RIS), or a repeater station, or a relay, or a radio frequency repeater, or a radio frequency relay; or, it may also be expressed as a repeater station node, a relay node; or, it may also be expressed as an intelligent repeater station, an intelligent relay, an intelligent repeater station node, and an intelligent relay node, etc. The repeater may be a node, or a device, or an entity, etc., and this disclosure is not limited thereto.

In the embodiment of this disclosure, the network device may be a device of a serving cell of a terminal equipment, or may also be a device of a cell where the repeater is located, or a device of a serving cell of the repeater, or a parent node of the repeater. Names of the repeater are not limited in this disclosure, and any device capable of achieving the above functions is included in the scope of the repeater of this application.

Currently, taking network congestion and other issues into account, NG-RAN supports overload and access control functionality, including a backoff in a random access procedure, radio resource control (RRC) connection rejection, RRC connection release, and a UE based access barring mechanism.

For example, in the random access procedure, the terminal equipment may possibly receive a backoff indication, the backoff mechanism is applicable to a contention-based random access procedure, and the backoff indication specifies a range of time needed by the terminal equipment in waiting before reselecting random access resources and/or transmitting random access preambles. The terminal equipment obtains a PREAMBLE_BACKOFF value according to the backoff indication, multiplies the value by a coefficient SCALING_FACTOR_BI, takes a random value between 0 and PREAMBLE_BACKOFF×SCALING_FACTOR_BI, in a case where random access is unsuccessful, after waiting for a period of the random value, performs selection and/or determination of random access resources and/or random access preambles, and transmits selected/determined random access preambles on determined random access resources.

For example, in the random access procedure, the terminal equipment may transmit a radio resource control (RRC) establishment request or resume request to a network side, the request carrying an establishment cause or resume cause. Based on the establishment cause or resume cause, the network side may determine whether to accept the request, and if the network side accepts the request, it may transmit an RRC establishment message or an RRC resume message, otherwise, it may make a response with an RRC reject message. By accepting or rejecting the RRC establishment request or the RRC resume request, the network side may control the congestion situation.

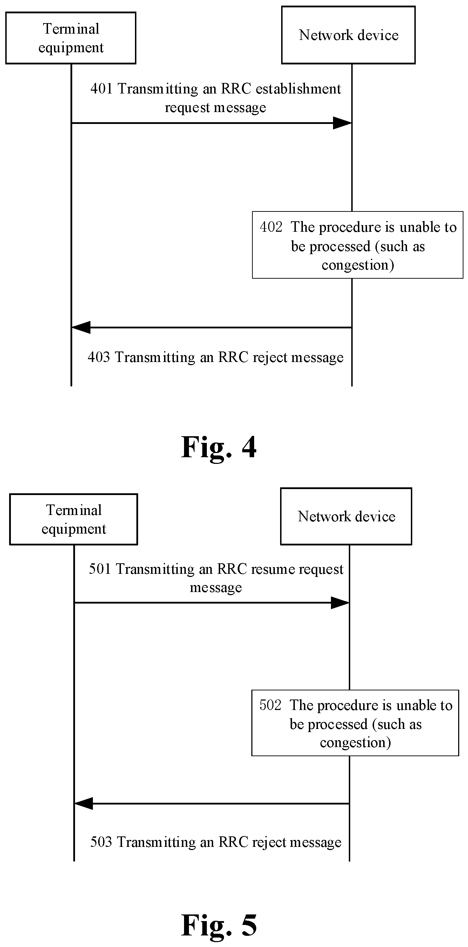

FIG. 4 is a schematic diagram of a method for attempting to establish new connection by the terminal equipment in an RRC idle state. As shown in FIG. 4, 401: the terminal equipment transmits an RRC establishment request RRCSetupRequest to the network device; 402: the network device determines that the request cannot be processed (for such reasons as network congestion, etc.); and 403: the network device transmits an RRC reject message (including carrying a wait time), so that the terminal equipment is kept in the RRC idle state.

FIG. 5 is a schematic diagram of a method for attempting to resume connection by the terminal equipment in an RRC inactive state. As shown in FIG. 5, 501: the terminal equipment transmits an RRC resume request RRCResumeRequest to the network device; 502: the network device determines that the request cannot be processed (for such reasons as network congestion, etc); and 503: the network device transmits an RRC reject message (including carrying a wait time) , so that the terminal equipment is kept in the RRC inactive state.

The network device prioritizes access attempts (i.e. emergency calls, MPS, and MCS users) with establishment causes of "emergency", "mps-PriorityAccess" and "mcs-PriorityAccess", and only makes response to these access attempts with connection reject messages under extreme network load conditions that may pose a threat to the stability of network device.

For example, RRC connection release is usually initiated by the network device, and a purpose of an RRCRelease procedure is to release RRC connection, including release of established radio bearers, backhaul radio link control (BH LRC) channels and radio resources.

The RRC connection release procedure may also be used to reorient the terminal equipment to an NR frequency or an E-UTRA carrier frequency. A reorientation mechanism in the RRC release may be used to achieve load balancing in NR.

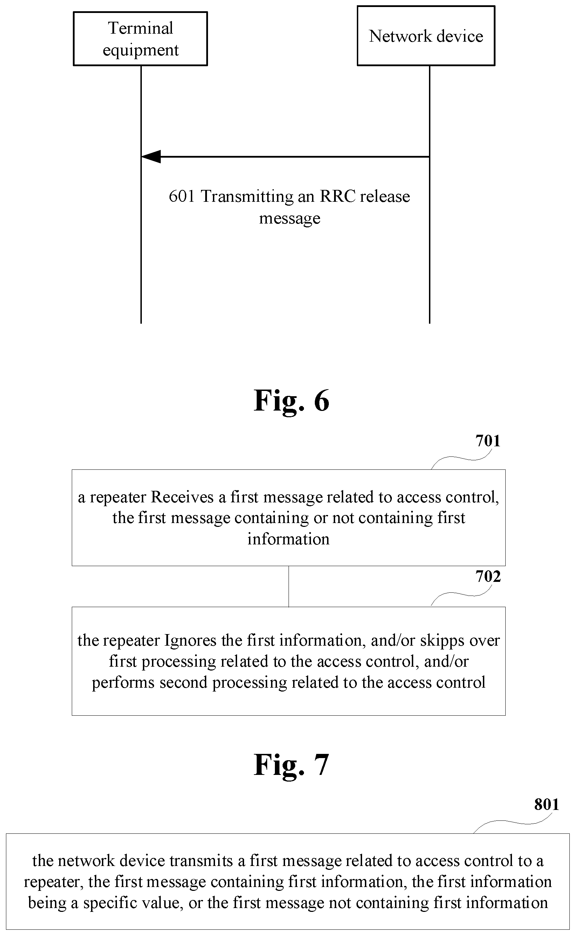

FIG. 6 is a schematic diagram of a method of RRC connection release. As shown in FIG. 6, 601: the network device transmits an RRC release message to the terminal equipment.

For example, an access barring mechanism based on a terminal equipment is used for a unified access control procedure/mechanism/architecture, that is, a terminal-equipment-based access barring mechanism. The network side may broadcast access control parameters, and based on access control parameters applicable to access categories to which the access attempts correspond, the network device checks whether to make actual access attempts. A unified access control mechanism may be applicable to user equipment that access to a 5G core network by using the Evolved Universal Mobile Telecommunications System (UMTS) Terrestrial Radio Access (E-UTRA) or NR. In addition, this mechanism may also be applicable a case where a user equipment in an idle or inactive or connected state initiates a new access attempt (such as a new session request, such as before transmitting MSG3, before transmitting a connection request message, or before transmitting a connection resume request message).

The NG-RAN broadcasts access control parameters associated with access categories and access IDs (in case of network sharing, the access control parameters may be set separately for each public land mobile communication network (PLMN)).

Based on the prohibited information broadcast for the access categories and access IDs selected for the selected PLMN and access attempts, the terminal equipment determines whether an access attempt is granted, for a request triggered by a non-access stratum (NAS, an upper layer), the NAS determines the access categories and access IDs, and for a request triggered by an access stratum (AS), RRC determines the access categories while the NAS determines the access IDs.

It was found by the inventors that for a scenario where a smart repeater is deployed, there is currently no research on how the smart repeater performs access control. The inventors believe that as a repeater does not initiate actual services, network congestion will not be caused, and the repeater does not need to be controlled by an access control mechanism. In addition, after the repeater is connected to the network, it will provide better radio quality for a terminal equipment at an edge of a cell, which may improve resource utilization, reduce resources needed in transmission, and effectively alleviate network congestion. This further indicates that the repeater does not need to be controlled by an access control mechanism.

It was further found by the inventors that if an existing access control mechanism for terminal equipment is followed, the repeater is controlled by the access control mechanism and may not be to access the network, thereby limiting application scenarios of the repeater and increasing deployment costs.

Addressed to the above problems, this disclosure shall be described below with reference to various implementations of the embodiments. These implementations are illustrative only and are not intended to limit this disclosure.

### Embodiment of a first aspect

The embodiment of this disclosure provides an access control method, which shall be described from a terminal equipment.

FIG. 7 is a schematic diagram of an access control method of the embodiment of this disclosure. As shown in FIG. 7, the method includes:
701: a repeater receives a first message related to access control, the first message containing or not containing first information; and
702: the repeater ignores the first information, and/or skips over first processing related to the access control, and/or performs second processing related to the access control.

With the embodiment of this disclosure, the repeater ignores the first information contained in the first message related to the access control, and/or skips over first processing related to the access control, and/or performs second processing related to the access control, so that the repeater is not controlled by an existing access control mechanism, thereby alleviating network congestion and lowering deployment costs. The "is not controlled" may be replaced with "is not applied/applicable", "does not use", "ignores", or "skips over", etc., and this disclosure is not limited thereto.

The existing access control mechanism mainly includes: backoff in a random access procedure, radio resource control (RRC) rejection, RRC release, and a unified access control procedure. Behaviors of the repeater in the above scenarios of access control mechanism shall be respectively described below, and the first message related to the access control is the first message in the above access control process.

### (I) Backoff in a random access procedure

In some embodiments, the random access procedure may be conventional contention-based random access, including two times of interaction (4-step RA) between the network device and the terminal equipment. In the first time of interaction, the terminal equipment initiates a random access request (MSG1) and receives a random access response (MSG2) fed back by the network device. In the second time of interaction, the terminal equipment transmits information including a user identifier (MSG3) to the network device and receives MSG4 fed back by the network device; or, the random access procedure may also be two-step random access (2-step RA), that is, original MSG1 and MSG3 are merged into a new MSGA, and MSG2 and MSG4 are merged into MSGB, and reference may be made to existing techniques for details, which shall not be repeated herein any further.

In some embodiments, the first message may include a random access response (RAR) in MSG2 or MSGB, and the first information may include backoff indication related information, the backoff indication related information being, for example, an MAC subheader carrying a backoff indication field. A value of the backoff indication field may be regarded as an index value of a backoff parameter, that is, the backoff indication field is used to indicate a backoff parameter value, which denotes a range of time needed in waiting before retransmitting a random access preamble. In 701, "receives" in "receives the first message related to access control by the repeater" may also be replaced with "detecting", "received", or "attempting to receive", that is, the "receive" here may indicate that the repeater performs a behavior of receiving (detecting) the first message, but does not indicate success or failure of reception, that is, the repeater may have received the first message or attempted to receive the first message but unsuccessful received it; however, the embodiment of this disclosure is not limited thereto.

In some embodiments, when the network device may distinguish between the terminal equipment and the repeater before transmitting the first message, the RAR or MSGB does not contain backoff indication related information, or contains backoff indication related information, and a value of the backoff indication field carried in the backoff indication related information is a specific value, which may be a specific value other than 0-13. The backoff parameter value to which the specific value (index) corresponds is 0 (ms), for example, the specific value may be 14 or 15; however, the embodiment of this disclosure is not limited thereto.

For example, when the first message is an RAR, the RAR does not contain MAC subheader (sub-PDU) carrying a backoff indication field, or, the RAR contains an MAC subheader (sub-PDU) carrying a backoff indication field, but a value of the backoff indication field is the specific value.

For example, when the first message is an MSGB, the MSGB may not contain an MAC subheader (sub-PDU) carrying a backoff indication field. For example, a value of a T1 field in the MSGB is 1 (indicating that the MAC subheader includes a random access preamble but does not include a T2 field, that is, it does not include a BI field), or a value of the T1 field in MSGB1 is 0 but a value of the T2 field is 1 (indicating that the MAC subheader contains an MAC SDU indicator but does not include the backoff indication field).

For example, when the first message is an MSGB, the MSGB may contain an MAC subheader (sub-PDU) carrying a backoff indication field. For example, a value of a T1 field in MSGB1 is 0, and a value of T2 field therein is 0 (indicating that the MAC subheader contains a backoff indication field), but a value of the backoff indication field is the specific value.

It can be seen from the above embodiment that as the first message does not contain backoff indication related information, or the value of the backoff indication field is a specific value (equivalent to that a backoff parameter value is 0 (ms)), in 702, the repeater skips over the first processing related to the access control after receiving the first message, such as not needing to perform backoff (waiting), that is, it is not controlled by the backoff mechanism in the random access procedure. Hence, network congestion may be alleviated and deployment costs may be lowered.

In some embodiments, before transmitting the first message, no matter whether the network device can distinguish between the terminal equipment and the repeater, the RAR or MSGB may contain the backoff indication related information. In 702, the ignoring the backoff indication and/or skipping over the first processing related to the access control by the repeater include(s) setting PREAMBLE_BACKOFF to be 0. That is, regardless of the value indicated by the backoff indication, the repeater does not need to look up a table to acquire a value of PREAMBLE-BACKOFF corresponding to the BI, rather, it directly sets PREAMBLE-BACKOFF to be 0. Hence, the repeater does not need to delay executing a random access resource selection procedure, or, in other words, the repeater executes the random access resource selection procedure with a wait time of 0, that is, it is not controlled by the backoff mechanism in the random access procedure. Hence, network congestion may be alleviated, and deployment costs may be lowered.

In some embodiments, when the first message is not successfully received in 701, in 702, the first processing related to the access control (including executing the random access resource selection process) is skipped over. For example, when the RAR is not successfully received, if the random access procedure is not completed, the repeater (immediately) executes the random access resource selection process. Thus, the repeater is not controlled by the backoff mechanism in the random access procedure. Hence, network congestion may be alleviated, and deployment costs may be lowered.

In some embodiments, the repeater receives the RAR in a random access response reception time window (ra-ResponseWindow, or msgB-ResponseWindow), the random access response reception time window being configured in beam failure recovery configuration BeamFailureRecoveryConfig or random access common configuration RACH-ConfigCommon (which is determined according to a triggering cause of random access, for example, if it is random access triggered by beam failure recovery, ra-ResponseWindow configured in BeamFailureRecoveryConfig is used) transmitted by the network device, and that the RAR is not successfully received includes at least one of the following cases where,
ra-ResponseWindow configured in BeamFailureRecoveryConfig expires, PDCCH transmission on a search space indicated by a recovery search space identifier (recoverySearchSpaceId, a search space used for a beam failure recovery RAR and configured by the network device) used for monitoring a response to a beam failure recovery request and addressed by a cell radio network temporary identifier (C-RNTI) is not received on a serving cell where random access preambles are transmitted, and at this moment of time, when the random access procedure is not completed, the repeater (immediately) executes the random access resource selection process; or,
ra-ResponseWindow configured in RACH-ConfigCommon expires, an RAR including a random access preamble matching with a transmitted random access preamble index PREAMBLE_INDEX (for example, the random access preamble indicates that an RAPID does not match with PREAMBLE_INDEX) is not received, and at this moment of time, when the random access procedure is not completed, the repeater (immediately) executes the random access resource selection process; or,
the random access response reception time window msgB-ResponseWindow expires, random access response reception has not yet been considered as being successful and is not applicable to a maximum number of times of transmission of MSGA (msgA-TransMax), or a random access preamble transmission counter PREAMBLE_TRANSMISSION_COUNTER is not equal to msgA-TransMax+1, and at this moment of time, when the random access procedure is not completed, the repeater (immediately) executes the random access resource selection process of 2-step RA type random access; or,
when contention resolution is deemed as being unsuccessful, and at this moment of time, the random access procedure is not completed, the repeater (immediately) executes the random access resource selection process. For example, if a random access type RA_TYPE is set to be 4-step RA, the repeater (immediately) executes the random access resource selection process; otherwise (i.e. the RA-TYPE is set to be 2-step RA), the repeater (immediately) executes the random access resource selection process of 2-step RA type random access.

### (II) RRC Reject

In some embodiments, before 701, when the repeater in an RRC idle state attempts to establish new connection, and/or the repeater in an RRC inactive state attempts to resume connection, it transmits a second message to the network, the second message including an RRC establishment request or an RRC resume request. In 701, the network device transmits the first message to the repeater, the first message including an RRC reject message. The first information includes a wait time waitTime, the wait time denoting a duration of timer T302 and being used to indicate a wait time of the repeater in initiating a next time of RRC connection establishment/resume process.

In some embodiments, the RRC reject message does not include a wait time. Therefore, in 702, the repeater skips over the first processing related to the access control after receiving the first message, such as not needing to start T302 (or setting T302 to be 0), that is, it immediately initiates a next time of RRC connection establishment/resume process without needing to wait, that is, it is not controlled by the wait time in the RRC reject message. Thus, network congestion may be alleviated and deployment costs may be lowered.

In some embodiments, the RRC reject message may also include a wait time, a value range of the wait time being [1,16] (illustrative, not inclusive of 0). In 702, the ignoring the wait time and/or skipping over the first processing related to the access control by the repeater includes determining the wait time to be 0. That is, regardless of a value of the wait time, the repeater does not need to be controlled by the wait time, and does not need to start T302 (or sets T302 to be 0). Therefore, the repeater does not need to delay and immediately initiates the next time of RRC connection establishment/resume process, or, in other words, the repeater waits time 0 and initiates the next of RRC connection establishment/resume process, that is, it is not controlled by the wait time in the RRC rejection, which may alleviate network congestion and lower deployment costs.

In some embodiments, the RRC reject message may also include a wait time, a value range of the wait time being [0,16] (illustrative, inclusive of 0). When a value of the wait time is not 0, the above operations are executed. When a value of the wait time is 0, in 702, the ignoring the wait time and/or skipping over the first processing related to the access control by the repeater includes determining the wait time to be 0, and/or the performing the second processing related to the access control includes setting T302 to be 0, and the repeater immediately initiates the next time of RRC connection establishment/resume process, that is, the wait time may be set to be 0. Therefore, the repeater does not need to delay and immediately initiates the next time of RRC connection establishment/resume process, or, in other words, the repeater waits time 0 and initiates the next of RRC connection establishment/resume process, that is, it is not controlled by the wait time in the RRC rejection, which may alleviate network congestion and lower deployment costs.

### (III) RRC release

In some embodiments, in 701, the network device transmits the first message to the repeater, the first message including an RRC release message. The first information includes a wait time, the wait time denoting a duration of timer T302. The wait time is used to indicate a wait time of the repeater in initiating the next time of RRC connection establishment procedure, and within the wait time, access attempts are barred.

In some embodiments, the RRC release message does not include a wait time. Therefore, in 702, the skipping over the first processing related to the access control by the repeater after receiving the first message includes that the repeater does not need to start T302 (or sets T302 to be 0). Therefore, the repeater may perform access attempt without needing to wait, that is, it is not controlled by the wait time in the RRC release, which may alleviate network congestion and lower deployment costs.

In some embodiments, the RRC release message may also include a wait time, a value range of the wait time being [1,16] (illustrative, not inclusive of 0). In 702, the ignoring the wait time and/or skipping over the first processing related to the access control by the repeater includes determining the wait time to be 0. That is, regardless of a value of the wait time, the repeater does not need to be controlled by the wait time, and does not need to start T302 (or sets T302 to be 0). Therefore, the repeater may perform access attempt without needing to wait, that is, it is not controlled by the wait time in the RRC release, which may alleviate network congestion and lower deployment costs.

In some embodiments, the RRC release message may also include a wait time, a value range of the wait time being [0,16] (illustrative, inclusive of 0). When a value of the wait time is not 0, the above operations are executed. When a value of the wait time is 0, in 702, the ignoring the wait time and/or skipping over the first processing related to the access control by the repeater includes determining the wait time to be 0, and/or the performing the second processing related to the access control includes setting T302 to be 0, and the repeater may perform access attempt without needing to wait, that is, it is not controlled by the wait time in the RRC release, which may alleviate network congestion and lower deployment costs.

### (IV) Unified access control procedure

In some embodiments, the first message includes system information (such as SIB 1) broadcast by the network device, the first information including access control parameters, the access control parameters being associated with an access category and an access ID. The access control parameter may include at least one of UAC-BarringInfoSetList, UAC-BarringPerCatList and UAC-BarringPerPLMN-List, and the access control parameter includes a barring time (uac-BarringTime) and/or a barring factor (uac-BarringFactor). The barring factor is used to compare with a random number, and whether access attempts are allowed is determined according to a comparison result. The barring time is used to calculate a duration of timer T390 (corresponding to the access category), and the access control parameter may be configured separately for each PLMN.

For example, multiple access categories may be pre-defined, including AC 0 to AC 30 defined in stands and AC 31 to AC 63 defined by operators. Multiple access categories may correspond to one establishment cause value, for example, AC 0 to AC 3 correspond to establishment cause value 1, AC 4 to AC 10 correspond to establishment cause value 2, etc., and this application is not limited thereto. Access categories and establishment cause values may be defined on demand.

For example, the access ID indicates provided configuration, and a range of values includes 0 to 15, wherein 0 indicates that no parameter is configured, 1 indicates that an MPS (multimedia priority service) is configured, 2 indicates that an MCS (mission critical service) is configured, 3 indicates a UE to which disaster conditions are applicable, 4-10 are reserved, and 11-15 indicates that configured access categories are 11-15.

In some embodiments, in a unified access control procedure, the network device may provide an access category, an access ID and the above access control parameter. The repeater may determine an applicable access barring parameter according to an access ID and access category of an access attempt, and perform a unified access control procedure (including access barring check), so as to determine whether the access attempt may be performed or whether it is barred. When the access attempt is barred, timer T390 corresponding to the access category is started, and when T390 expires, when timer T302 is not running (if the access category is 2, whether timer T302 is running needs not to be considered), barring of the access category is alleviated.

In some embodiments, after receiving the access control parameter, the repeater may skip over the unified access control procedure, or may perform the unified access control procedure according to the access control parameter, which shall be respectively described below.

### (I) The repeater may skip over the unified access control procedure

In some embodiments, in 701, the repeater receives SIB1, including the access control parameter, transmitted by the network device. In 702, the skipping over the first processing related to the access control by the repeater includes skipping over the unified access control procedure.

In some embodiments, when a first condition is satisfied, an RRC layer of the repeater skips over the unified access control procedure, the first condition including that:
when initiating an RRC connection establishment procedure, an upper layer provides an access category and one or more access IDs when requesting establishment of RRC connection, or,
when initiating an RRC connection resume procedure is initiated, and resuming RRC connection is triggered by response to NG-RAN paging, or,
when an RRC connection resume procedure is initiated and resuming RRC connection is triggered by upper layers, the upper layers provide an access category and one or more access IDs, or
when an RRC connection resume procedure is initiated, and resuming RRC connection is triggered due to an RNA update.

In some embodiments, when the RRC connection resume procedure is initiated and the resuming the RRC connection is triggered by the response to the NG-RAN paging, the skipping over the first processing related to the access control includes: skipping over the unified access control procedure by the lower layer (e.g. the RRC layer) of the repeater, and optionally, it may also include: selecting 0 as an access category by the RRC layer of the repeater.

In some embodiments, when the RRC connection resume procedure is initiated and the resuming the RRC connection is triggered due to the RNA update, the unified access control procedure includes: skipping over the unified access control procedure by the RRC layer of the repeater, and optionally, it may also include: not determining an access category by the RRC layer of the repeater, and/or in performing emergency services, setting a resume establishment cause to be an emergency situation by the RRC layer of the repeater.

In some embodiments, the RRC connection establishment/resume request cause needs to include an establishment cause. Although the lower layer (e.g. RRC layer) of the repeater skips over access control check, in order to obtain an RRC establishment cause, for an access attempt, the lower layer (e.g. RRC layer) of the repeater needs to determine an access category and (one or more) access IDs, thereby determining an RRC establishment cause corresponding to the access category. Or, the upper layer (such as an NAS) of the repeater does not provide an access category and access ID to the lower layer (such as the RRC layer), but provides an RRC establishment cause. Hence, as the upper layer has already provided the RRC establishment cause, even if an access category is not determined, an establishment cause may still be determined.

In some embodiments, in order to ensure access barring check of an access attempt determined by the lower layer in an inactive state or in a 5GMM connected state inactively indicated by RRC, the upper layer (such as the NAS) of the repeater provides an access ID used by a determined access attempt to the lower layer (such as the RRC layer).

### (II) The repeater may perform the unified access control procedure according to the access control parameter

In some embodiments, the access control parameter may be associated with a repeater-specific access category and/or a repeater-specific access ID.

For example, there may be multiple pre-defined access categories, such as including AC 0 to AC 30 defined in standards and AC 31 to AC 63 defined by operators. In addition, a repeater-specific access category (AC) may be defined, such as AC64, AC65, or an existing AC may be modified to be repeater-specific, such as AC31, AC63. Additionally, at least one of 4-10 reserved in the access IDs may be modified to be a repeater-specific access ID. In 702, the repeater performs second processing related to the access control includes executing the unified access control procedure by the repeater based on the repeater-specific access category and/or the repeater-specific access ID. For example, the repeater determines the repeater-specific access category and/or the repeater-specific access ID, and the access control parameters include a barring time and/or a barring factor, the barring time and/or the barring factor being applicable to the repeater-specific access category and/or the repeater-specific access ID, and the repeater executes the unified access control procedure according to the access control parameters associated with the repeater-specific access category and/or the repeater-specific access ID.

In some embodiments, the access control parameter may be repeater-specific access control parameter, including a repeater-specific barring factor and/or a repeater-specific barring time configured for the access category and/or access ID; or, the access control parameter may be a repeater-specific ratio/factor. For example, the repeater-specific barring factor and/or the repeater-specific barring time is/are obtained by calculating (+ × MOD, etc.) a barring factor and/or the barring time of the terminal equipment in the access control parameter with the repeater-specific ratio/factor. In 702, the repeater performs second processing related to the access control includes performing the unified access control procedure by the repeater by using the repeater-specific access control parameter. For example, the repeater determines the access category and/or access ID, and performs the unified access control procedure according to the repeater-specific access control parameter associated with the access category and/or the access ID.

In some embodiments, the performing the unified access control procedure by the repeater according to the access control parameter (the access control parameter associated with the repeater-specific access category and/or the access ID, or the repeater-specific access control parameter associated with the access category and/or the access ID) includes: acquiring a random number uniformly distributed in a range of [0,1] by the repeater, and determining by the repeater that the access attempt is allowed if the random number is less than a value indicated by a barring factor obtained according to the access control parameter; otherwise, deeming by the repeater that the access attempt is barred. If the access attempt is barred, the repeater acquires a random number uniformly distributed in the range of [0,1], and starts timer T390 of this access category, a value of the timer being calculated by using the barring time obtained according to the access control parameter and a calculation formula T390 = (0.7 + 0.6 × random number) × barring time. When T390 expires, when timer T302 is not running (if the access category is 2, whether timer T302 is running needs not to be considered), barring of the access category is alleviated.

It should be noted that FIG. 7 only schematically illustrates the embodiment of this disclosure; however, this disclosure is not limited thereto. For example, an order of execution of the steps may be appropriately adjusted, and furthermore, some other steps may be added, or some steps therein may be reduced. And appropriate variants may be made by those skilled in the art according to the above contents, without being limited to what is contained in FIG. 7.

It can be seen from the above embodiment that the repeater ignores the first information contained in the first message related to access control, and/or skips over first processing related to the access control, and/or performs second processing related to the access control, so that the repeater may not be controlled by an existing access control mechanism. Hence, network congestion may be alleviated, and the deployment cost may be lowered.

### Embodiment of a second aspect

The embodiment of this disclosure provides an access control method, which shall be described from a network device.

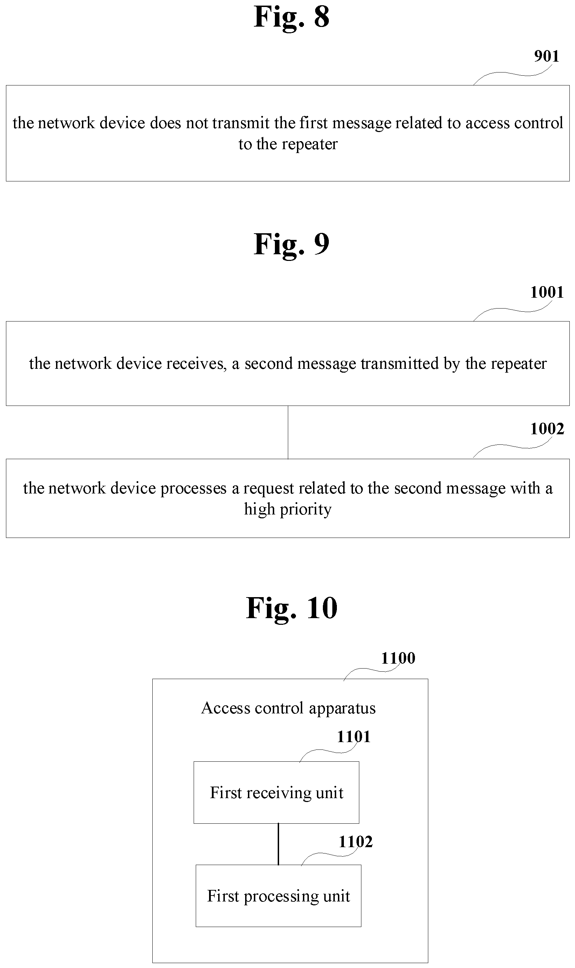

FIG. 8 is a schematic diagram of an access control method of the embodiment of this disclosure. As shown in FIG. 8, the method includes:
801: the network device transmits a first message related to access control to a repeater, the first message containing first information, the first information being a specific value, or the first message not containing first information.

In some embodiments, the first message includes: an RAR or MSGB, and the first information includes backoff indication related information.

In some embodiments, the RAR or MSGB does not contain the backoff indication related information, or contains backoff indication related information, and a value of the backoff indication is 0.

In some embodiments, the first message includes: an RRC reject message or an RRC release message, and the first information includes a wait time.

In some embodiments, the RRC reject message or the RRC release message does not include the wait time, or includes the wait time, and a value of the wait time is 0.

In some embodiments, the first message includes SIB1, and the first information includes access control parameter.

In some embodiments, SIB1 includes the access control parameter.

In some embodiments, the access control parameter is repeater-specific access control parameter, the repeater-specific access control parameter including a repeater-specific barring factor and/or a repeater-specific barring time, or a repeater-specific ratio/factor.

In some embodiments, the access control parameter is associated with an access category and an access ID, the access category being repeater-specific access category, and the access ID being repeater-specific access ID.

In some embodiments, reference may be made to (1) to (4) in the embodiment of the first aspect for implementations of the first message and first information, which shall not be repeated herein any further.

It can be seen from the above embodiment that the repeater is not controlled by an existing access control mechanism. Hence, network congestion may be alleviated, and deployment costs may be lowered.

FIG. 9A is a schematic diagram of an access control method of the embodiment of this disclosure. As shown in FIG. 9A, the method includes:
901: the network device does not transmit the first message related to access control to the repeater.

In some embodiments, in radio resource control (RRC) reject and RRC release, the first message includes an RRC reject message and/or an RRC release message, and the network device does not transmit the RRC reject message to the repeater, or does not transmit the RRC release message, that is, the repeater will not receive the first message related to access control (the RRC reject message and/or the RRC release message) transmitted by the network device.

In some embodiments, for a radio resource control (RRC) reject mechanism, before 901, the method may further include (not shown): the network device receives, a second message transmitted by the repeater, the second message including an RRC establishment request and/or an RRC resume request, that is, the network device does not reject the RRC establishment request of the repeater and/or does not reject the RRC resume request of the repeater.

In some embodiments, optionally, the method may further include (not shown): the network device transmits a third message to the repeater, the third message including an RRC establishment message and/or an RRC resume message, and reference may be made to existing techniques for details, which shall not be repeated herein any further.

In some embodiments, for an RRC release mechanism, the network device does not release RRC connection of the repeater, hence, it does not transmit an RRC release message to the repeater.

FIG. 9B is a schematic diagram of an access control method of the embodiment of this disclosure. As shown in FIG. 9B, the method includes:
901': the repeater does not receive, a first message related to access control transmitted by the network device.

In some embodiments, for the radio resource control (RRC) reject mechanism, before 901, the method may further include (not shown): the repeater transmits a second message to the network device, the second message including an RRC establishment request and/or an RRC resume request.

In some embodiments, optionally, the method may further include (not shown): the network device receives a third message transmitted, the third message including an RRC establishment message and/or an RRC resume message, and reference may be made to existing techniques for details, which shall not be repeated herein any further.

In some embodiments, for the RRC release mechanism, the network device will not release the RRC connection of the repeater, hence, it does not transmit an RRC release message to the repeater.

Hence, the repeater does not receive the RRC reject message and/or the RRC release message, and is not controlled by the existing access control mechanism. Thus, network congestion may be alleviated, and deployment costs may be lowered.

FIG. 10 is a schematic diagram of an access control method of the embodiment of this disclosure. As shown in FIG. 10, the method includes:
1001: the network device receives, a second message transmitted by the repeater; and
1002: the network device processes a request related to the second message with a high priority.

In some embodiments, in the radio resource control (RRC) reject access control mechanism, the second message includes an RRC establishment request and/or an RRC resume request. In 1002, the network device processes request(s) related to the RRC establishment request and/or the RRC resume request with a high priority, including processing access attempts of the repeater with a high priority.

In some embodiments, the method may further include (not shown): when a second condition is satisfied, the network device transmits a first message to the repeater, the first message including an RRC reject message. The second condition includes: an extreme network load that may pose a threat to the stability of network device. That is, the access attempts of the repeater (the request related to the second message) are rejected only under extreme network load conditions that may pose a threat to the stability of network device, that is, the RRC reject message for the access attempts of the repeater is transmitted to the repeater.

In some embodiments, in 1001, the repeater transmits the second message in attempting to establish new connection in an RRC idle state or in attempting to resume connection from an RRC inactive state. For example, the repeater transmits an RRC establishment request message in attempting to establish new connection in the RRC idle state, or transmits an RRC resume request message in attempting to resume the connection from the RRC inactive state.

Hence, the network device processes the requests related to the second message with a high priority, so as to lower a probability that access attempts of the repeater are rejected. Thus, network congestion may be alleviated, and deployment costs may be lowered.

### Embodiment of a third aspect

The embodiment of this disclosure provides an access control apparatus. The apparatus may be, for example, a repeater, or may also be one or more components or assemblies configured in the repeater, with contents identical to those in the embodiment of the first aspect being not going to be described herein any further.

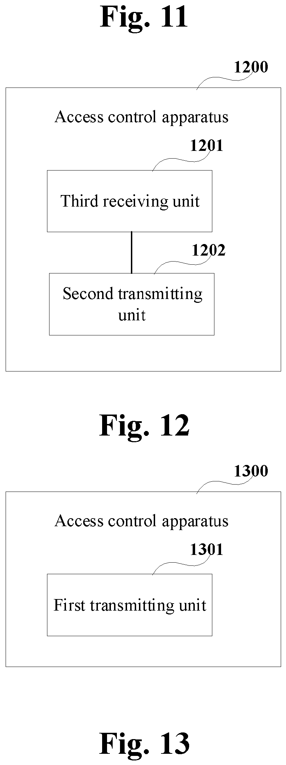

FIG. 11 is a schematic diagram of an access control apparatus of the embodiment of this disclosure. As shown in FIG. 11, an access control apparatus 1100 includes:
a first receiving unit 1101 configured to receive a first message related to access control, the first message containing or not containing first information; and
a first processing unit 1102 configured to ignore the first information, and/or skip over first processing related to the access control, and/or perform second processing related to the access control.

In some embodiments, reference may be made to 701-702 for implementations of first receiving unit 1101 and the first processing unit 1102, with repeated parts being not going to be described herein any further.

In some embodiments, the first message includes an RAR or an MSGB, and the first information includes backoff indication related information.

In some embodiments, the RAR or MSGB does not contain the backoff indication related information, or contains the backoff indication related information, and a value of a backoff indication field in the backoff indication related information is a specific value.

In some embodiments, the RAR or MSGB contains the backoff indication related information.

In some embodiments, that the first processing unit ignores the value of backoff indication field in the backoff indication related information and/or skips over first processing related to the access control include(s) setting PREAMBLE_BACKOFF to be 0.

In some embodiments, when the first receiving unit fails in receiving the first message related to access control, the first processing unit skips over the first processing related to the access control.

In some embodiments, when the first receiving unit fails in receiving the RAR, if a random access procedure is not completed, the first processing unit performs a random access resource selection procedure.

In some embodiments, that the RAR is not successfully received includes:
a random access response reception time window configured in beam failure recovery configuration expires, and PDCCH transmission on a search space indicated by a recovery search space identifier used for monitoring a response to a beam failure recovery request and addressed by a cell radio network temporary identifier is not received on a serving cell where random access preambles are transmitted; or,
a random access response reception time window configured in random access common configuration expires, and an RAR including a random access preamble matching with a transmitted random access preamble index PREAMBLE_INDEX is not received; or,
the random access response reception time window expires, random access response reception has not yet been considered as being successful and is not applicable to a maximum number msgA-TransMax of times of transmission of MSGA, or a random access preamble transmission counter PREAMBLE_TRANSMISSION_COUNTER is not equal to a maximum number of times of transmission of MSGA(msgA-TransMax)+1; or,
contention resolution is deemed as being unsuccessful.

In some embodiments, the first message includes an RRC reject message or an RRC release message, and the first information includes a wait time.

In some embodiments, that the repeater ignores the wait time and/or skips over the first processing related to the access control include(s) setting the wait time to be 0.

In some embodiments, the RRC reject message or the RRC release message does not contain a wait time or contains a wait time, a value of the wait time being 0.

In some embodiments, the first message includes SIB1, and the first information includes an access control parameter.

In some embodiments, the SIB 1 includes the access control parameter.

In some embodiments, that the first processing unit ignores the access control parameter and/or skips over first processing related to access control include(s) that the first processing unit skips over a unified access control procedure.

In some embodiments, when a first condition is satisfied, the repeater skips over the unified access control procedure at an RRC layer,
the first condition including that:
when initiating an RRC connection establishment procedure, an upper layer provides an access category and one or more access IDs when requesting establishment of RRC connection, or,
when initiating an RRC connection resume procedure is initiated, and resuming RRC connection is triggered by response to NG-RAN paging, or,
when an RRC connection resume procedure is initiated and resuming RRC connection is triggered by upper layers, the upper layers provide an access category and one or more access IDs, or
when an RRC connection resume procedure is initiated, and resuming RRC connection is triggered due to an RNA update.

In some embodiments, that the first processing unit skips over first processing related to access control further includes that the first processing unit selects 0 as the access category at the RRC layer or does not determine an access category.

In some embodiments, the first processing unit is further configured to:
determine an access category and an access ID at an RRC layer, or,
not to provide the access category and the access ID at an upper layer to a lower layer, but provide a cause for RRC establishment, or,
provide at the upper layer an access ID used in a determined access attempt to the lower layer.

In some embodiments, the access control parameter is associated with an access category and/or an access ID, the access category being a repeater-specific access category, and the access ID being a repeater-specific access ID.

In some embodiments, the access control parameter is a repeater-specific access control parameter.

In some embodiments, the repeater-specific access control parameter includes a repeater-specific barring factor and/or a repeater-specific barring time, or a repeater-specific ratio/factor.

In some embodiments, that the first processing unit performs second processing related to access control includes that performs a unified access control procedure by using the access control parameter.

In some embodiments, the repeater is a network controlled repeater.

FIG. 12 is a schematic diagram of an access control apparatus of the embodiment of this disclosure. As shown in FIG. 12, an access control apparatus 1200 includes:
a third receiving unit 1201 configured not to receive the first message related to access control transmitted by the network device.

In some embodiments, the apparatus further includes:
a second transmitting unit 1202 configured to transmit a second message to the network device.

In some embodiments, after the second transmitting unit transmits the second message, the third receiving unit will not receive the first message.

In some embodiments, the third receiving unit is further configured to receive a third message transmitted by the network device.

In some embodiments, the first message includes an RRC reject message or an RRC release message.

In some embodiments, the second message includes an RRC establishment request message, or an RRC resume request message.

In some embodiments, the third message includes an RRC establishment message, or an RRC resume message.

The above implementations only illustrate the embodiment of this disclosure. However, this disclosure is not limited thereto, and appropriate variants may be made on the basis of these implementations. For example, the above implementations may be executed separately, or one or more of them may be executed in a combined manner.

It should be noted that the components or modules related to this disclosure are only described above. However, this disclosure is not limited thereto, and the access control apparatuses 1100/1200 may further include other components or modules, and reference may be made to related techniques for particulars of these components or modules.

Furthermore, for the sake of simplicity, connection relationships between the components or modules or signal profiles thereof are only illustrated in FIGs. 11 and 12. However, it should be understood by those skilled in the art that such related techniques as bus connection, etc., may be adopted. And the above components or modules may be implemented by hardware, such as a processor, a memory, a transmitter, and a receiver, etc., which are not limited in the embodiment of this disclosure.

It can be seen from the above embodiment that the repeater ignores the first information contained in the first message related to access control, and/or skips over first processing related to the access control, and/or performs second processing related to the access control, so that the repeater may not be controlled by an existing access control mechanism. Hence, network congestion may be alleviated, and the deployment cost may be lowered.

### Embodiment of a fourth aspect

The embodiment of this disclosure provides an access control apparatus. The apparatus may be, for example, a network device, or may also be one or more components or assemblies configured in the network device, with contents identical to those in the embodiment of the second aspect being not going to be described herein any further.

FIG. 13 is a schematic diagram of an access control apparatus of the embodiment of this disclosure. As shown in FIG. 13, an access control apparatus 1300 includes:
a first transmitting unit 1301 configured to transmit a first message related to access control to a repeater, the first message containing first information, the first information being a specific value, or the first message not containing first information;
   or,
not to transmit a first message related to access control to a repeater.

In some embodiments, that the first transmitting unit does not transmit a first message related to access control to a repeater includes that the first transmitting unit does not transmit an RRC reject message to the repeater, or does not transmit an RRC release message to the repeater.

In some embodiments, when a second condition is satisfied, the first transmitting unit transmits a first message to the repeater.

In some embodiments, the second condition includes: an extreme network load that may pose a threat to the stability of network device.

In some embodiments, the first message includes: an RRC reject message or an RRC release message.

In some embodiments, the first message includes: an RAR or MSGB, and the first information includes backoff indication related information.

In some embodiments, the RAR or MSGB does not contain the backoff indication related information, or contains the backoff indication related information, and a value of a backoff indication field in the backoff indication related information is a specific value.

In some embodiments, that the first transmitting unit transmit a first message related to access control to the repeater includes: transmitting the RRC reject message or the RRC release message by the network device to the repeater.

In some embodiments, the first information includes a wait time.

In some embodiments, the RRC reject message or the RRC release message does not include the wait time, or includes the wait time, and a value of the wait time is 0.

In some embodiments, the first message includes SIB1, and the first information includes access control parameter.

In some embodiments, SIB1 includes the access control parameter.

In some embodiments, the access control parameter is associated with an access category and/or an access ID, the access category being repeater-specific access category, and the access ID being repeater-specific access ID.

In some embodiments, the access control parameter is a repeater-specific access control parameter.

In some embodiments, the repeater-specific access control parameter includes a repeater-specific barring factor and/or a repeater-specific barring time, or a repeater-specific ratio/factor.

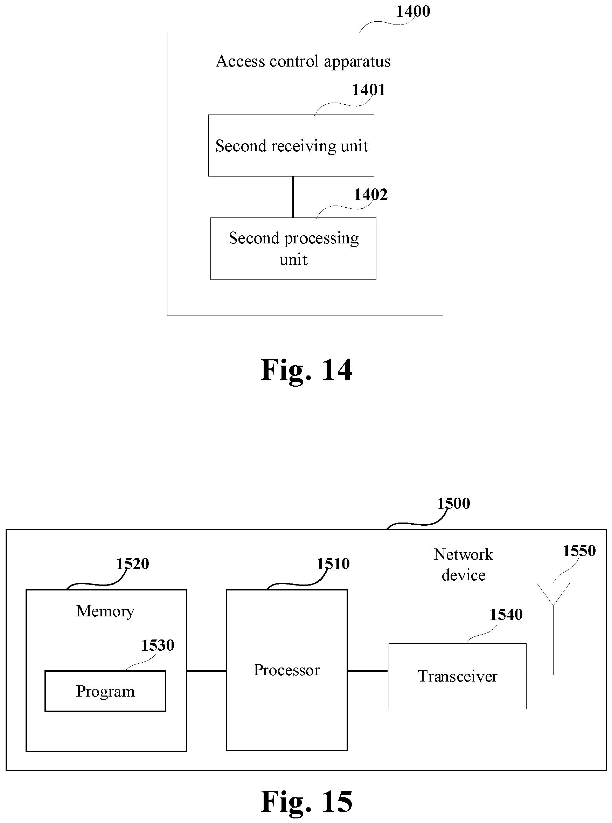

FIG. 14 is a schematic diagram of an access control apparatus of the embodiment of this disclosure. As shown in FIG. 14, an access control apparatus 1400 includes:
a second receiving unit 1401 configured to receive second message transmitted by a repeater; and
a second processing unit 1402 configured to process a request related to the second message with a high priority.

In some embodiments, that the second processing unit processes a request related to the second message with a high priority includes processing an access attempt of the repeater with a high priority.

In some embodiments, the repeater transmits the second message in attempting to establish new connection in an RRC idle state or in attempting to resume connection from an RRC inactive state.

In some embodiments, the second message includes an RRC establishment request message, or an RRC resume request message.

In some embodiments, reference may be made to 801 or 901 for implementation of the first transmitting unit 1301, and reference may be made to 1001-1002 for implementations of the second receiving unit 1401 and the second processing unit 1402, which shall not be described herein any further.

The above implementations only illustrate the embodiment of this disclosure. However, this disclosure is not limited thereto, and appropriate variants may be made on the basis of these implementations. For example, the above implementations may be executed separately, or one or more of them may be executed in a combined manner.

It should be noted that the components or modules related to this disclosure are only described above. However, this disclosure is not limited thereto, and the access control apparatuses 1300/1400 may further include other components or modules, and reference may be made to related techniques for particulars of these components or modules.

Furthermore, for the sake of simplicity, connection relationships between the components or modules or signal profiles thereof are only illustrated in FIGs. 13 and 14. However, it should be understood by those skilled in the art that such related techniques as bus connection, etc., may be adopted. And the above components or modules may be implemented by hardware, such as a processor, a memory, a transmitter, and a receiver, etc., which are not limited in the embodiment of this disclosure.

### Embodiment of a fifth aspect

The embodiment of this disclosure provides a communication system, and reference may be made to FIG. 1, with contents identical to those in the embodiments of the first to the fourth aspects being not going to be described herein any further.

In some embodiments, the communication system may include a repeater 1500.

In some embodiments, the communication system may include a network device 1600.

The embodiment of this disclosure further provides a network device, which may be, for example, a base station. However, this disclosure is not limited thereto, and it may also be another network device.

FIG. 15 is a schematic diagram of a structure of a network device of the embodiment of this disclosure. As shown in FIG. 15, a network device 1500 may include a processor 1510 (such as a central processing unit (CPU)) and a memory 1520, the memory 1520 being coupled to the processor 1510. The memory 1520 may store various data, and furthermore, it may store a program 1530 for information processing, and execute the program 1530 under control of the processor 1510.

For example, the processor 1510 may be configured to execute a program to carry out the access control method as described in the embodiment of the third aspect.

Furthermore, as shown in FIG. 15, the network device 1500 may include a transceiver 1540, and an antenna 1550, etc. Functions of the above components are similar to those in the related art, and shall not be described herein any further. It should be noted that the network device 1500 does not necessarily include all the parts shown in FIG. 15, and furthermore, the network device 1500 may include parts not shown in FIG. 15, and the related art may be referred to.

The embodiment of this disclosure further provides a repeater; however, this disclosure is not limited thereto, and it may also be other devices, such as a terminal equipment having functions of a repeater.

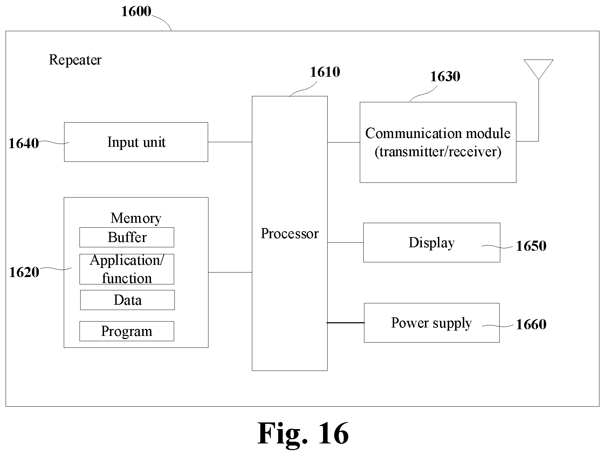

FIG. 16 is a schematic diagram of the repeater of the embodiment of this disclosure. As shown in FIG. 16, a repeater 1600 may include a processor 1610 and a memory 1620, the memory 1620 storing data and a program and being coupled to the processor 1610. It should be noted that this figure is illustrative only, and other types of structures may also be used, so as to supplement or replace this structure and achieve a telecommunications function or other functions.

For example, the processor 1610 may be configured to execute a program to carry out the access control method as described in the embodiment of the first aspect.

As shown in FIG. 16, the repeater 1600 may further include a communication module 1630, an input unit 1640, a display 1650, and a power supply 1660, wherein functions of the above components are similar to those in the related art, which shall not be described herein any further. It should be noted that the repeater 1600 does not necessarily include all the parts shown in FIG. 16, and the above components are not necessary. Furthermore, the repeater 1600 may include parts not shown in FIG. 16, and the related art may be referred to.

An embodiment of this disclosure provides a computer readable program, which, when executed in a repeater, causes the repeater to carry out the access control method as described in the embodiment of the first aspect.

An embodiment of this disclosure provides a computer storage medium, including a computer readable program, which causes a repeater to carry out the access control method as described in the embodiment of the first aspect.

An embodiment of this disclosure provides a computer readable program, which, when executed in a repeater, causes the repeater to carry out the access control method as described in the embodiment of the second aspect.

An embodiment of this disclosure provides a computer storage medium, including a computer readable program, which causes a repeater to carry out the access control method as described in the embodiment of the second aspect.

The above apparatuses and methods of this disclosure may be implemented by hardware, or by hardware in combination with software. This disclosure relates to such a computer-readable program that when the program is executed by a logic device, the logic device is enabled to carry out the apparatus or components as described above, or to carry out the methods or steps as described above. This disclosure also relates to a storage medium for storing the above program, such as a hard disk, a floppy disk, a CD, a DVD, and a flash memory, etc.

The methods/apparatuses described with reference to the embodiments of this disclosure may be directly embodied as hardware, software modules executed by a processor, or a combination thereof. For example, one or more functional block diagrams and/or one or more combinations of the functional block diagrams shown in the drawings may either correspond to software modules of procedures of a computer program, or correspond to hardware modules. Such software modules may respectively correspond to the steps shown in the drawings. And the hardware module, for example, may be carried out by firming the soft modules by using a field programmable gate array (FPGA).

The soft modules may be located in an RAM, a flash memory, an ROM, an EPROM, an EEPROM, a register, a hard disc, a floppy disc, a CD-ROM, or any memory medium in other forms known in the art. A memory medium may be coupled to a processor, so that the processor may be able to read information from the memory medium, and write information into the memory medium; or the memory medium may be a component of the processor. The processor and the memory medium may be located in an ASIC. The soft modules may be stored in a memory of a mobile terminal, and may also be stored in a memory card of a pluggable mobile terminal. For example, if equipment (such as a mobile terminal) employs an MEGA-SIM card of a relatively large capacity or a flash memory device of a large capacity, the soft modules may be stored in the MEGA-SIM card or the flash memory device of a large capacity.

One or more functional blocks and/or one or more combinations of the functional blocks in the drawings may be realized as a universal processor, a digital signal processor (DSP), an application-specific integrated circuit (ASIC), a field programmable gate array (FPGA) or other programmable logic devices, discrete gate or transistor logic devices, discrete hardware component or any appropriate combinations thereof carrying out the functions described in this application. And the one or more functional block diagrams and/or one or more combinations of the functional block diagrams in the drawings may also be realized as a combination of computing equipment, such as a combination of a DSP and a microprocessor, multiple processors, one or more microprocessors in communication combination with a DSP, or any other such configuration.

This disclosure is described above with reference to particular embodiments. However, it should be understood by those skilled in the art that such a description is illustrative only, and not intended to limit the protection scope of the present invention. Various variants and modifications may be made by those skilled in the art according to the spirits and principle of the present invention, and such variants and modifications fall within the scope of the present invention.

As to implementations containing the above embodiments, following supplements are further disclosed.
1. An access control method, applicable to a repeater, characterized in that the method includes:
   receiving a first message related to access control by the repeater, the first message containing or not containing first information; and
   ignoring the first information, and/or skipping over first processing related to the access control, and/or performing second processing related to the access control, by the repeater.
2. The method according to supplement 1, wherein the first message includes an RAR or an MSGB, and the first information includes backoff indication related information.
3. The method according to supplement 2, wherein the RAR or MSGB does not contain the backoff indication related information, or contains the backoff indication related information, and a value of a backoff indication field in the backoff indication related information is a specific value.
4. The method according to supplement 2, wherein the RAR or MSGB contains the backoff indication related information.
5. The method according to supplement 4, wherein that the repeater ignores the value of a backoff indication field in the backoff indication related information and/or skips over first processing related to the access control include(s) setting PREAMBLE BACKOFF to be 0.
6. The method according to supplement 2, wherein when the repeater fails in receiving the first message related to access control, the repeater skips over the first processing related to the access control.
7. The method according to supplement 6, wherein that when the repeater fails in receiving the first message related to access control, the repeater skips over the first processing related to the access control, includes: performing a random access resource selection procedure by the repeater if the random access procedure is not completed when the RAR is not successfully received.
8. The method according to supplement 7, wherein that the RAR is not successfully received includes:
   a random access response reception time window configured in beam failure recovery configuration expires, and PDCCH transmission on a search space indicated by a recovery search space identifier used for monitoring a response to a beam failure recovery request and addressed by a cell radio network temporary identifier is not received on a serving cell where random access preambles are transmitted; or,
   a random access response reception time window configured in random access common configuration expires, and an RAR including a random access preamble matching with a transmitted random access preamble index PREAMBLE_INDEX is not received; or,
   a random access response reception time window expires, random access response reception has not yet been considered as being successful and is not applicable to a maximum number msgA-TransMax of times of transmission of MSGA, or a random access preamble transmission counter PREAMBLE_TRANSMISSION_COUNTER is not equal to msgA-TransMax+1; or,
   contention resolution is deemed as being unsuccessful.
9. The method according to supplement 1, wherein the first message includes an RRC reject message or an RRC release message, and the first information includes a wait time.
10. The method according to supplement 1 or 9, wherein that the repeater ignores the wait time and/or skips over the first processing related to the access control include(s) setting the wait time to be 0.
11. The method according to supplement 9, wherein the RRC reject message or the RRC release message does not contain a wait time or contains a wait time, a value of the wait time being 0.
12. The method according to supplement 1, wherein the first message includes SIB1, and the first information includes an access control parameter.
13. The method according to supplement 12, wherein the SIB 1 includes the access control parameter.
14. The method according to supplement 1 or 12 or 13, wherein that the repeater ignores the access control parameter and/or skips over first processing related to access control include(s) that the repeater skips over a unified access control procedure.
15. The method according to supplement 14, wherein the method further includes:
   skipping over the unified access control procedure at an RRC layer by the repeater when a first condition is satisfied,
   the first condition including that:
      when initiating an RRC connection establishment procedure, an upper layer provides an access category and one or more access IDs when requesting establishment of RRC connection, or,
      when initiating an RRC connection resume procedure is initiated, and resuming RRC connection is triggered by response to NG-RAN paging, or,
      when an RRC connection resume procedure is initiated and resuming RRC connection is triggered by upper layers, the upper layers provide an access category and one or more access IDs, or
      when an RRC connection resume procedure is initiated, and resuming RRC connection is triggered due to an RNA update.
16. The method according to supplement 15, wherein that the repeater skips over first processing related to access control further includes that the RRC layer of the repeater selects 0 as the access category or that the repeater does not determine an access category.
17. The method according to supplement 14, wherein the method further includes:
   determining an access category and an access ID by the RRC layer of the repeater, or,
   not providing an access category and an access ID by an upper layer of the repeater to a lower layer, but providing a cause for RRC establishment, or,
   providing an access ID used in a determined access attempt by an upper layer of the repeater to a lower layer.
18. The method according to supplement 13, wherein the access control parameter is associated with an access category and/or an access ID, the access category being a repeater-specific access category, and the access ID being a repeater-specific access ID.
19. The method according to supplement 13, wherein the access control parameter is a repeater-specific access control parameter.
20. The method according to supplement 19, wherein the repeater-specific access control parameter includes a repeater-specific barring factor and/or a repeater-specific barring time, or a repeater-specific ratio/factor.
21. The method according to supplement 13 or 14 or 18 or 19, wherein that the repeater performs second processing related to access control includes that the repeater performs a unified access control procedure by using the access control parameter.
22. The method according to any one of supplements 1-21, wherein the repeater is a network controlled repeater.
23. An access control method, applicable to a network device, characterized in that the method includes:
   transmitting a first message related to access control by the network device to a repeater, the first message containing first information, the first information being a specific value, or the first message not containing first information;
      or,
   not transmitting a first message related to access control by the network device to a repeater;
      or,
   receiving, by the network device, a second message transmitted by a repeater, and processing a request related to the second message by the network device with a high priority.
24. The method according to supplement 23, wherein the first message includes an RRC reject message or an RRC release message.
25. The method according to supplement 23 or 24, wherein the not transmitting a first message related to access control by the network device to a repeater includes not transmitting an RRC reject message by the network device to the repeater, or not transmitting an RRC release message by the network device to the repeater.
26. The method according to supplement 23 or 24, wherein the processing a request related to the second message by the network device with a high priority includes processing an access attempt of the repeater with a high priority.
27. The method according to supplement 26, wherein when a second condition is satisfied, the network device transmits a first message to the repeater.
28. The method according to supplement 27, wherein the second condition includes: an extreme network load that may pose a threat to the stability of network device.
29. The method according to supplement 23 or any one of supplements 26-28, wherein the repeater transmits the second message in attempting to establish new connection in an RRC idle state or in attempting to resume connection from an RRC inactive state.
30. The method according to supplement 29, wherein the second message includes an RRC establishment request message or an RRC resume request message.
31. The method according to supplement 23, wherein the first message includes an RAR or an MSGB, and the first information includes backoff indication related information.
32. The method according to supplement 31, wherein the RAR or MSGB does not contain the backoff indication related information, or contains the backoff indication related information, and a value of a backoff indication field in the backoff indication related information is a specific value.
33. The method according to supplement 23 or 24, wherein the transmitting a first message related to access control by the network device to a repeater includes transmitting an RRC reject message or an RRC release message by the network device to the repeater.
34. The method according to supplement 23 or 24 or 33, wherein the first information includes a wait time.
35. The method according to supplement 34, wherein the RRC reject message or the RRC release message does not contain a wait time or contains a wait time, a value of the wait time being 0.
36. The method according to supplement 23, wherein the first message includes SIB1, and the first information includes an access control parameter.
37. The method according to supplement 36, wherein the SIB 1 includes the access control parameter.
38. The method according to supplement 37, wherein the access control parameter is associated with an access category and/or an access ID, the access category being a repeater-specific access category, and the access ID being a repeater-specific access ID.
39. The method according to supplement 37, wherein the access control parameter is a repeater-specific access control parameter.
40. The method according to supplement 39, wherein the repeater-specific access control parameter includes a repeater-specific barring factor and/or a repeater-specific barring time, or a repeater-specific ratio/factor.
41. An access control method, applicable to a repeater, characterized in that the method includes:
   not receiving, by the repeater, a first message related to access control transmitted by a network device.
42. The method according to supplement 41, wherein the method further includes:
   transmitting a second message by the repeater to the network device.
43. The method according to supplement 42, wherein the repeater does not receive the first message after transmitting the second message to the network device.
44. The method according to supplement 41 or 42 or 43, wherein the method further includes:
   receiving, by the repeater, a third message transmitted by the network device.
45. The method according to any one of supplements 41-44, wherein the first message includes an RRC reject message or an RRC release message.
46. The method according to any one of supplements 42-44, wherein the second message includes an RRC establishment request message or an RRC resume request message.
47. The method according to any one of supplements 44-46, wherein the third message includes an RRC establishment message or an RRC resume message.
48. A network device, including a memory and a processor, the memory storing a computer program, wherein the processor is configured to execute the computer program to carry out the access control method described in any one of supplements 23-40.
49. A repeater, including a memory and a processor, the memory storing a computer program, wherein the processor is configured to execute the computer program to carry out the method described in any one of supplements 1-22 and 41-47.
50. A communication system, including:
   the repeater as described in supplement 49, and/or the network device as described in supplement 48.

## Claims

1. An access control apparatus, applicable to a repeater, **characterized in that** the apparatus comprising:
a first receiving unit configured to receive a first message related to access control, the first message containing or not containing first information; and
a first processing unit configured to ignore the first information, and/or skip over first processing related to the access control, and/or perform second processing related to the access control.

2. The apparatus according to claim 1, wherein the first message comprises an RAR or an MSGB, and the first information comprises backoff indication related information.

3. The apparatus according to claim 2, wherein the RAR or MSGB does not contain the backoff indication related information, or contains the backoff indication related information, and a value of a backoff indication field in the backoff indication related information is a specific value.

4. The apparatus according to claim 2, wherein the RAR or MSGB contains the backoff indication related information.

5. The apparatus according to claim 4, wherein that the first processing unit ignores the backoff indication field in the backoff indication related information and/or skips over first processing related to the access control include(s) setting PREAMBLE BACKOFF to be 0.

6. The apparatus according to claim 2, wherein when the first receiving unit fails in receiving the first message related to access control, the first processing unit skips over the first processing related to the access control.

7. The apparatus according to claim 6, wherein when the first receiving unit fails in receiving the RAR, if a random access procedure is not completed, the first processing unit performs a random access resource selection procedure.

8. The apparatus according to claim 1, wherein the first message comprises an RRC reject message or an RRC release message, and the first information comprises a wait time.

9. The apparatus according to claim 8, wherein the RRC reject message or the RRC release message does not contain a wait time or contains a wait time, a value of the wait time being 0.

10. The apparatus according to claim 1, wherein the first message comprises SIB 1, and the first information comprises an access control parameter.

11. The apparatus according to claim 1, wherein the first processing unit ignores the access control parameter and/or skips over first processing related to access control comprise(s) that the first processing unit skips over a unified access control procedure.

12. The apparatus according to claim 11, wherein the first processing unit is further configured to:
determine an access category and an access ID at an RRC layer, or,
not to provide an access category and an access ID at an upper layer to a lower layer, but provide a cause for RRC establishment, or,
provide at an upper layer an access ID used in a determined access attempt to a lower layer.

13. The apparatus according to claim 10, wherein the access control parameter is associated with an access category and/or an access ID, the access category being a repeater-specific access category, and the access ID being a repeater-specific access ID.

14. The apparatus according to claim 10, wherein the access control parameter is a repeater-specific access control parameter.

15. The apparatus according to claim 14, wherein the repeater-specific access control parameter comprises a repeater-specific barring factor and/or a repeater-specific barring time, or a repeater-specific ratio/factor.

16. The apparatus according to claim 10, wherein that the first processing unit performs second processing related to access control comprises that the first processing unit performs a unified access control procedure by using the access control parameter.

17. The apparatus according to claim 1, wherein the repeater is a network controlled repeater.

18. An access control apparatus, applicable to a network device, **characterized in that** the apparatus comprising:
a first transmitting unit configured to transmit a first message related to access control to a repeater, the first message containing first information, the first information being a specific value, or the first message not containing first information;
or,
not to transmit a first message related to access control to a repeater;
or,
the apparatus comprising:
a second receiving unit configured to receive second message transmitted by a repeater; and
a second processing unit configured to process a request related to the second message with a high priority.

19. The apparatus according to claim 18, wherein that the first transmitting unit does not transmit a first message related to access control to a repeater comprises that the first transmitting unit does not transmit an RRC reject message to the repeater, or does not transmit an RRC release message to the repeater.

20. The apparatus according to claim 18, wherein that the second processing unit processes a request related to the second message with a high priority comprises processing an access attempt of the repeater with a high priority.
